# EUROPÄISCHE PATENTSCHRIFT

(11) **EP 3 874 315 B1**
(45) Veröffentlichungstag und Bekanntmachung des Hinweises auf die Patenterteilung: **03.09.2025**
(21) Anmeldenummer: 19801714.7
(22) Anmeldetag: 29.10.2019
(51) Int. Cl.: G02B 21/36, G02B 21/24, G02B 21/26

(54) **MIKROSKOPSYSTEM ZUR ABBILDUNG EINES PROBENBEREICHS UND ENTSPRECHENDES VERFAHREN**
MICROSCOPE SYSTEM FOR IMAGING A SAMPLE REGION AND CORRESPONDING METHOD
SYSTÈME DE MICROSCOPE POUR REPRODUIRE UNE ZONE D'ÉCHANTILLON ET PROCÉDÉ CORRESPONDANT

(30) Priorität: 30.10.2018 DE 102018127076
(43) Veröffentlichungstag der Anmeldung: 08.09.2021
(73) Patentinhaber: Leica Microsystems CMS GmbH, 35578 Wetzlar (DE); Leica Instruments (Singapore) Pte. Ltd., 608924 Singapore (SG)
(72) Erfinder: FABRIS, Stefan, 99947 Bad Langensalza (DE); GOMBOS, Jozsef Attila, 9435 Heerbrugg (CH)
(74) Vertreter: Schaumburg und Partner Patentanwälte mbB
(86) Internationale Anmeldenummer: PCT/EP2019/079523
(87) Internationale Veröffentlichungsnummer: WO 2020/089223

(56) Entgegenhaltungen:
- DE-A1- 102012 021 726
- US-A1- 2004 109 169
- US-A1- 2005 280 818
- H PINKARD ET AL: "Micro-Magellan: open-source, sampleadaptive, acquisition software for optical microscopy", NO.10 | OCTOBER 2016, 29 September 2016 (2016-09-29), pages 807, XP055491550, Retrieved from the Internet <URL:https://www.nature.com/articles/nmeth.3991> [retrieved on 20180710]
- PERKINELMER: "Volocity User Guide", 30 September 2011 (2011-09-30), XP055664821, Retrieved from the Internet <URL:http://cellularimaging.perkinelmer.com/pdfs/manuals/VolocityUserGuide.pdf> [retrieved on 20200204]

## Beschreibung

Die vorliegende Erfindung betrifft ein Mikroskopsystem zur Abbildung zumindest eines Bereichs einer Probe mit einer Bilderzeugungseinrichtung zur mikroskopischen Abbildung eines in einem Fokus eines Beobachtungsstrahlengangs liegenden Teilbereichs des abzubildenden Probenbereichs, einer Verfahreinrichtung bzw. Scaneinrichtung, die eingerichtet ist, den abzubildenden Teilbereich in den Fokus des Beobachtungsstrahlengangs der Bilderzeugungseinrichtung zu verfahren, sowie einer Steuereinrichtung, die abhängig von einem zu definierenden Verfahrbereich (Scanbereich) die Verfahreinrichtung derart ansteuert, dass innerhalb des definierten Verfahrbereichs eine vorbestimmte Menge von Teilbereichen angefahren und durch die Bilderzeugungseinrichtung abgebildet wird.

Derartige Mikroskopsysteme sind allgemein aus dem Stand der Technik bekannt. Sie kommen beispielsweise zum Einsatz, wenn eine Probe bzw. der abzubildende Probenbereich die Abmessungen überschreitet, die eine mikroskopische Abbildung im Sichtfeld der Abbildungsoptik (englisch "field of view") erfassen kann. Häufig kann ein Übersichtsbild eines Teils der Probe bei niedriger Vergrößerung erzeugt werden. Ein Benutzer wählt dann beispielsweise den interessierenden Probenbereich aus, der dann nach einem festgelegten Muster abgefahren bzw. abgescannt wird. Hierbei wird der abzubildende Probenbereich dadurch abgebildet, dass gemäß dem vorbestimmten Scanmuster eine vorbestimmte Menge von Teilbereichen angefahren und abgebildet wird, wobei anschließend die erzeugten Bilder durch ein geeignetes Bildverarbeitungsprogramm überlagert und zu einem Gesamtbild (Mosaikbild) des Probenbereichs zusammengesetzt werden. In der Regel handelt es sich bei dem abzubildenden Probenbereich um ein Probenvolumen, das sich in x-, y- und z-Richtung ausdehnt. Meistens wird der Probenbereich in mehreren x- y-Ebenen bei unterschiedlichen z-Koordinaten abgescannt. Hierzu weist das Mikroskopsystem in der Regel einen in x- und y-Richtung verfahrbaren Mikroskoptisch, sowie eine Fokussiereinrichtung auf, die den Fokus des Beobachtungsstrahlengangs des Mikroskopsystems in z-Richtung variieren bzw. festlegen kann. Zu Zwecken der Fokussierung ist das Objektiv des Mikroskopsystems und/oder der genannte Mikroskoptisch in z-Richtung verfahrbar.

Bei solchen bekannten Mikroskopsystemen erweist sich die Festlegung des abzubildenden Probenbereichs bzw. des zugeordneten Verfahrbereichs (Scanbereichs) häufig als problematisch und wenig benutzerfreundlich. Bisher wird beispielsweise der Scanbereich durch Slider festgelegt, mit denen die Scanbereiche in x-, y- und z-Richtung definiert werden können. Wird der Scanbereich zu groß gewählt werden von der Abbildung Bereiche umfasst, in denen entweder keine Probe vorhanden ist oder nicht interessierende Probenbereiche liegen. Beides erhöht den Aufwand und die Zeitdauer der Bilderfassung. Werden die Scanbereiche zu klein gewählt, besteht die Gefahr, das interessierende Probenvolumen nicht vollständig abgebildet zu haben.

In "H. Pinkard et al: Micro-Magellan: open-source, sample-adaptive, acquisition software for optical microscopy, No. 10, October 2016, 29. September 2016, Seite 807" sowie in "PerkinElmer: Volocity User Guide, 30. September 2011" werden Möglichkeiten beschrieben, ein Verfahrvolumen auf einer Anzeige in x- und y-Richtung zu wählen. Ebenso ist aus der US 2005/280818 A1 ein Verfahren bekannt, bei dem der Benutzer einen Aufnahmebereich durch Aufziehen eines Rechtecks in einer zweidimensionalen Querschnittsansicht festlegt. Dieses Rechteck wird anschließend automatisch in ein dreidimensionales Verfahrvolumen mit vordefinierter Tiefe umgerechnet, wobei die Tiefe durch Ziehen von Bearbeitungspunkten angepasst werden kann.

Aufgabe der vorliegenden Erfindung ist es, eine Möglichkeit zu schaffen, den dem abzubildenden Probenbereich entsprechenden Verfahrbereich bzw. Scanbereich präziser und benutzerfreundlicher festlegen zu können.

### Offenbarung der Erfindung

Diese Aufgabe wird durch die Gegenstände der unabhängigen Patentansprüche gelöst. Vorteilhafte Ausgestaltungen ergeben sich aus den jeweiligen Unteransprüchen und der nachfolgenden Beschreibung.

Bei dem erfindungsgemäßen Mikroskopsystem handelt es sich um ein Mikroskopsystem der eingangs genannten Art. Zur Abbildung zumindest eines Bereichs einer Probe weist das Mikroskopsystem eine Bilderzeugungseinrichtung zur mikroskopischen Abbildung eines in einem Fokus eines Beobachtungsstrahlengangs liegenden Teilbereichs des abzubildenden Probenbereichs auf. Eine solche Bilderzeugungseinrichtung umfasst beispielsweise mindestens ein Mikroskopobjektiv, einen Vergrößerungswechsler und/oder ein Zoomsystem sowie in der Regel einen Tubus mit nachgeschalteter Kamera. Auch tubuslose Mikroskope sind bekannt. So kann das Mikroskopbild beispielsweise direkt auf einen Bildsensor abgebildet sein. Auf diese Weise kann in bekannter Art und Weise ein im Beobachtungsstrahlengang liegender Teilbereich mikroskopisch abgebildet werden. Weiterhin weist das Mikroskopsystem eine Verfahr- bzw. Scaneinrichtung auf, die eingerichtet ist, den jeweils abzubildenden Teilbereich in den Beobachtungsstrahlengang der genannten Bilderzeugungseinrichtung zu verfahren. Hierzu wird der die Probe tragende Mikroskoptisch verfahren und/oder die Fokussiereinrichtung des Mikroskopsystems entsprechend eingestellt. Zu Zwecken der Fokussierung ist das Objektiv und/oder der Mikroskoptisch in Fokusrichtung verfahrbar. Auf diese Weise kann ein abzubildender Teilbereich in allen drei Raumrichtungen angefahren und von der Bilderzeugungseinrichtung abgebildet werden. Vorteilhafterweise sind die in den Beobachtungsstrahlengang gefahrenen Teilbereiche in einem Fokus der Bilderzeugungseinrichtung angeordnet.

Das erfindungsgemäße Mikroskopsystem weist weiterhin eine graphische Benutzerschnittstelle auf, die auf einem Display dargestellt ist und zur Festlegung eines dem abzubildenden Probenbereich entsprechenden Verfahrbereichs oder Scanbereichs durch mindestens eine Benutzereingabe dient.

Unter einer "graphischen Benutzerschnittstelle" kann hierbei eine von einem Programm erzeugte grafische Anzeige verstanden werden. Auf dieser kann ein Benutzer eine Eingabe von Instruktionen an das Mikroskopsystem vornehmen. Die Instruktionen werden in Aktionen des Mikroskopsystems umgesetzt. Die Eingabe durch den Benutzer erfolgt direkt in der Anzeige, beispielsweise durch Verfahren eines Mauszeigers (englisch "Cursor") und Anklicken oder Anwählen gewünschter Positionen. Wenn es sich bei dem Display um einen berührungssensitiven oder kapazitiven Bildschirm (englisch "Touchscreen") handelt, kann die Eingabe mit einem Finger oder einem zu dem Bildschirm passenden Eingabestift erfolgen.

Die graphische Benutzerschnittstelle ist derart eingerichtet, dass sie ein Koordinatensystem anzeigt und durch Eingabe von drei Punkten in dem Koordinatensystem der Verfahrbereich in Form eines Verfahrvolumens definiert wird. Abhängig von dem definierten Verfahrvolumen steuert die Steuereinrichtung des Mikroskopsystems die Verfahreinrichtung derart an, dass innerhalb des definierten Verfahrvolumens eine vorbestimmte Menge von Teilbereichen angefahren und durch die Bilderzeugungseinrichtung abgebildet wird. Mit anderen Worten wird eine dem Verfahrvolumen entsprechende Menge von Teilbereichen nacheinander in den Beobachtungsstrahlengang gefahren und die Teilbereiche jeweils abgebildet. Die auf diese Weise erzeugten Bilder der Teilbereiche werden in bekannter Art und Weise überlagert und zusammengesetzt, um eine Abbildung des abzubildenden Probenbereichs zu erhalten. Die Anzahl und Positionen der Teilbereiche innerhalb des Volumens richten sich nach der geforderten Bildqualität dieser Abbildung.

Die graphische Benutzerschnittstelle ist zumindest derart eingerichtet, dass ein Benutzer den zur Abbildung des gewünschten Probenbereichs entsprechenden Verfahrbereich festlegen bzw. definieren kann. Hierzu wird auf der graphischen Benutzerschnittstelle ein Koordinatensystem angezeigt, innerhalb dessen der Benutzer durch Eingabe mehrerer Punkte ein Verfahr- bzw. Scanvolumen definieren kann. Der auf diese Weise definierte Verfahrbereich wird von der Benutzerschnittstelle beispielsweise in Form eines fest umrissenen Verfahrvolumens angezeigt. Nach Bestätigung des definierten Verfahrvolumens erfolgt dann beispielsweise der Scan mit der jeweiligen Bilderzeugung. Hierzu kann beispielsweise die graphische Benutzerschnittstelle mit einer Recheneinheit in Verbindung stehen, die zur Erzeugung von Signalen ausgebildet ist, welche an die Steuereinrichtung gegeben werden. Eine solche Recheneinheit kann aber auch separat beispielsweise im Display oder auf einer Graphikkarte vorhanden sein.

Hierbei ist es besonders vorteilhaft, wenn mindestens einer, insbesondere aber jeder der vom Benutzer einzugebenden Punkte auf oder in dem abzubildenden Probenbereich liegt. Hierbei ist es besonders zweckmäßig, wenn ein Benutzer nacheinander drei Punkte definiert, die Randpunkte des abzubildenden Probenbereichs darstellen. Durch Auswahl von mindestens drei solcher Punkte im Raum kann ein entsprechendes Probenvolumen ausgewählt und der entsprechende Verfahrbereich als Verfahrvolumen definiert und mit der graphischen Benutzerschnittstelle angezeigt werden. Anschließend erfolgt dann das Scannen innerhalb des definierten Verfahrvolumens mit jeweiliger Bilderzeugung.

Ohne Beschränkung der Allgemeinheit soll im Folgenden davon ausgegangen werden, dass das angezeigte Koordinatensystem ein kartesisches Koordinatensystem in x-, y- und z-Richtung ist. Durch Auswahl von mindestens drei Punkten in einem solchen Koordinatensystem kann - wenn zumindest einer dieser Punkte nicht in der gleichen Ebene wie die anderen Punkte liegt - ein dreidimensionales Verfahrvolumen definiert werden. Wiederum soll ohne Beschränkung der Allgemeinheit von einem quaderförmigen Verfahrvolumen ausgegangen werden. Selbstverständlich lassen sich auch andere Verfahrvolumina in einem kartesischen Koordinatensystem bei Festlegung von mindestens drei Punkten definieren. Weiterhin kann auch ein anderes Koordinatensystem zugrunde gelegt werden, etwa ein Kugel- oder Zylinder-Koordinatensystem. Wenn im Folgenden von x-, y-, z-Koordinaten die Rede ist, so soll dies den allgemeinen Erfindungsgedanken nicht einschränken. Gleiches gilt für die Form der definierten Verfahrvolumina.

Im Folgenden ist eine erste vorteilhafte Möglichkeit der Definition eines quaderförmigen Verfahrbereichs beschrieben.

Von der graphischen Benutzerschnittstelle werden in dem angezeigten Koordinatensystem zunächst ein erster Punkt A und ein zweiter Punkt B in einer gemeinsamen x-y-Ebene eingegeben. Bei dem Punkt A handelt es sich vorteilhafterweise um die aktuelle Fokusposition, wobei der Punkt A einen Randpunkt bzw. Grenzwert des zu definierenden Verfahrbereichs bildet. Anschließend wird die Probe durch Verfahren des Mikroskoptisches in der x-y-Ebene weiter bewegt bis zu einem zweiten Grenzwert B, den der Benutzer beispielsweise durch eine geeignete Eingabe über einen Button oder mit Mausklick bestätigt. Die graphische Benutzerschnittstelle ist derart eingerichtet, dass ein vordefinierter rechteckiger Verfahrbereich definiert wird, wobei die Punkte A und B Randpunkte bzw. Grenzwerte dieses Verfahrbereichs bilden. Insbesondere zweckmäßig ist es, wenn die Punkte A und B einander gegenüberliegende Eckpunkte des rechteckigen Verfahrbereichs bilden. Auf Grundlage der Definition des rechteckigen Verfahrbereichs kann prinzipiell bereits ein Bildscan vorgenommen werden, der dann jedoch auf die ausgewählte x-y-Ebene beschränkt ist. Zur Definition eines Verfahrvolumens gibt der Benutzer in demselben angezeigten Koordinatensystem einen dritten Punkt C ein, der außerhalb der durch die Punkte A und B verlaufenden x-y-Ebene liegt. In vorteilhafter Weise ist die graphische Benutzerschnittstelle derart eingerichtet, dass der eingegebene dritte Punkt C ein Randpunkt des insbesondere quaderförmigen Verfahrbereichs bildet. Der Punkt C liegt beispielsweise in einer Ebene, die der durch die Punkte A und B aufgespannten Ebene gegenüber liegt und parallel zu dieser verläuft. Mit Vorteil liegt der Punkt C auf oder in dem abzubildenden Probenbereich. Wiederum kann es zweckmäßig sein, wenn der Punkt C an einer Ecke des quaderförmigen Verfahrbereichs liegt. Beispielsweise kann der Benutzer ausgehend von einem der Punkte A oder B den Probenbereich in z-Richtung verfahren, um zu einem Punkt zu gelangen, den er als Punkt C festlegt. Ausgehend von den drei festgelegten Punkten A, B und C definiert die graphische Benutzerschnittstelle das quaderförmigen Verfahrvolumen.

Nach Definition des quaderförmigen Verfahrvolumens steuert die Steuereinrichtung des Mikroskopsystems die Verfahreinrichtung in vorbestimmter Weise an, sodass der hierdurch definierte Probenbereich abgescannt wird. Beispielsweise werden zunächst Bilder von Teilbereichen in einer x-y-Ebene aufgenommen, danach in einer zu dieser x-y-Ebene parallelen Ebene, und sofort, bis das gesamte Scanvolumen abgescannt ist. An jeder Scanposition wird ein Bild erzeugt, die aufgenommenen Bilder an den verschiedenen Scanpositionen werden überlagert und zu einem Gesamtbild des Probenbereichs zusammengesetzt.

Dem Fachmann ist ersichtlich, dass durch Eingabe von drei Punkten im Raum eines Koordinatensystems auch andere vorgegebene Verfahrvolumina definiert werden können. Prinzipiell können nahezu beliebige geometrische Körper durch Definition dreier Randpunkte dieses Körpers vorgegeben werden. In der Praxis der Mikroskopsysteme mit in x-y-Richtung verfahrbaren Mikroskoptischen und in z-Richtung bewegbaren Fokussiereinrichtungen ist ein quaderförmiges Verfahrvolumen in aller Regel am zweckmäßigsten.

Weiterhin ist es nicht zwingend notwendig, dass die drei angegebenen Punkte A, B und C sämtlich in oder auf dem abzubildenden Probenbereich liegen.

Beispielsweise kann der Punkt C in dem oben dargelegten Beispiel der Definition eines quaderförmigen Verfahrbereichs in eine Höhe (z-Koordinate) gesetzt werden, die sicherstellt, dass sämtliche z-Koordinaten des abzubildenden Probenbereichs erfasst werden. Zu diesem Zweck kann der Punkt C etwas höher gesetzt werden als sich die Probe tatsächlich erstreckt. Gleiche Betrachtungen gelten in völlig analoger Weise für die Punkte A und B.

Im Folgenden sei eine weitere vorteilhafte Möglichkeit der Definition eines quaderförmigen Verfahrbereichs beschrieben, welche nicht unter den Schutzbereich der Ansprüche fällt.

Bei dieser weiteren Möglichkeit ist es ausreichend, lediglich zwei Punkte A und C in das von der graphischen Benutzerschnittstelle angezeigte Koordinatensystem einzugeben. Hierzu ist die graphische Benutzerschnittstelle derart eingerichtet, dass sie die beiden eingegebenen Punkte als Randpunkte eines quaderförmigen Verfahrbereichs betrachtet. In vorteilhafter Weise definieren die beiden Punkte A und C einander gegenüberliegende Eckpunkte des quaderförmigen Verfahrvolumens, genauer gesagt bilden sie den Anfangs- und Endpunkt einer Raumdiagonale des quaderförmigen Verfahrvolumens. Nähere Erläuterungen auch zu dieser Ausgestaltung finden sich in den Ausführungsbeispielen am Ende der Beschreibung.

Schließlich sei auf eine weitere vorteilhafte Möglichkeit der Definition eines quaderförmigen Verfahrbereichs oder allgemeiner eines beliebigen vordefinierten Verfahrvolumens hingewiesen, welche nicht unter den Schutzbereich der Ansprüche fällt. Hierzu kann die graphische Benutzerschnittstelle derart eingerichtet sein, dass ausgehend von einem in dem angezeigten Koordinatensystem eingegebenen Punkt A ein vordefinierter Volumenumriss in dem Koordinatensystem angezeigt wird, mittels dessen das Verfahrvolumen definiert wird bzw. das das Verfahrvolumen definiert. Beispielsweise kann ein quaderförmiger Volumenumriss in dem Koordinatensystem angezeigt werden, an dessen einer Ecke beispielsweise der eingegebene Punkt A lokalisiert ist. Eine derartige Ausgestaltung ist beispielsweise dann sinnvoll, wenn in zeitlicher Abfolge Probenbereiche gleicher oder ähnlicher Abmessung untersucht werden sollen, sodass sich das Verfahrvolumen wenig ändert. In diesem Fall kann die Vorgabe eines einzigen Eck- oder Randpunktes (Punkt A) dieses Verfahrvolumens zur Definition desselbigen ausreichen.

Weiterhin kann die graphische Benutzerschnittstelle derart eingerichtet sein, dass ein Flächen- oder Raumgitter aus den den abzubildenden Teilbereichen entsprechenden Anfahrpunkten in dem Koordinatensystem angezeigt wird, in dem das Verfahrvolumen enthalten ist. Beispielsweise kann ein quaderförmiges Raumgitter in dem Koordinatensystem angezeigt werden, an dessen einer Ecke beispielsweise der Punkt A lokalisiert ist. Die den Teilbereichen entsprechenden Anfahrpunkte sind in dem Raumgitter markiert.

Allgemein ist es vorteilhaft, wenn das definierte Verfahrvolumen in dem Koordinatensystem beispielsweise in Form eines Volumenumrisses oder Raumgitters, das die Grenzen des Verfahrbereichs veranschaulicht, angezeigt wird. Es kann auch sinnvoll sein, wenn das maximal mögliche Verfahrvolumen oder ein maximaler Verfahrbereich in dem Koordinatensystem angezeigt wird. Das maximal mögliche Verfahrvolumen ist durch die Systemparameter des Mikroskoptisches und der Fokussiereinrichtung, also durch die maximalen jeweiligen Verfahrwege in x-, y- und z-Richtung, festgelegt. Bei dieser Ausgestaltung kann der Benutzer sehen, wie weit er sich von den Grenzen des maximal möglichen Verfahrvolumens entfernt befindet.

Häufig werden zur Auffindung des interessierenden abzubildenden Probenbereichs bereits Aufnahmen von Teilbereichen der Probe gemacht. Die Aufnahmen können vorher bereits entstanden sein oder während der Definition des Verfahrvolumens entstehen. Solche Abbildungen oder auch aufgenommene Bildfolgen in z-Richtung können von der graphischen Benutzerschnittstelle in einem gesonderten Anzeigebereich oder - beispielweise semitransparent - in dem Koordinatensystem angezeigt werden, um dem Benutzer beispielsweise die Definition des Verfahrvolumens zu erleichtern.

In einer vorteilhaften Ausgestaltung ist die graphische Benutzerschnittstelle derart eingerichtet, dass nach Definition des Verfahrvolumens dieses durch Eingabe wenigstens eines weiteren Punktes modifiziert bzw. neu definiert werden kann. Beispielsweise kann durch Auswahl und Eingabe eines weiteren Punktes D, der außerhalb des definierten Verfahrvolumens liegt, das Verfahrvolumen erweitert werden, während durch Eingabe eines weiteren Punktes D, der innerhalb eines definierten Verfahrvolumens liegt, dieses Verfahrvolumen verkleinert werden. Hierbei ist es insbesondere zweckmäßig, wenn der eingegebene weitere Punkt D einen neuen Randpunkt des neu definierten, insbesondere erweiterten bzw. verkleinerten Verfahrvolumens bildet. Dieser neue Randpunkt kann hierbei insbesondere ein neuer Kanten- oder Eckpunkt beispielsweise eines quaderförmigen Verfahrbereichs sein. Bei dieser Ausgestaltung kann es auch zweckmäßig sein, wenn die graphische Benutzerschnittstelle derart eingerichtet ist, dass durch Anwahl bzw. Anklicken eines Randpunktes des angezeigten definierten Verfahrvolumens dieses in definierter Weise, insbesondere unter Beibehaltung der Quaderform, auseinandergezogen oder verkleinert werden kann. Sobald das Verfahrvolumen wie gewünscht modifiziert ist, bestätigt der Benutzer dies durch eine Eingabe (beispielsweise Loslassen des angeklickten Randpunktes) an dem neuen Punkt D.

Die Erfindung betrifft weiterhin ein Verfahren zur Abbildung zumindest eines Bereichs einer Probe mittels eines Mikroskopsystems gemäß Anspruch 2.

Bezüglich des erfindungsgemäßen Verfahrens, seiner Ausgestaltungen und Vorteile sei ausdrücklich auf die Erläuterungen zum erfindungsgemäßen Mikroskopsystem verwiesen.

Gemäß einer vorteilhaften Ausführungsform wird mindestens einer der drei einzugebenden Punkte (A, B, C, D) derart gewählt, dass dieser auf oder in dem abzubildenden Probenbereich liegt.

Gemäß einer vorteilhaften Ausführungsform werden die drei Punkte (A, B, C) als Randpunkte des Verfahrvolumens verwendet.

Gemäß einer weiteren vorteilhaften Ausführungsform wird als das angezeigte Koordinatensystem ein kartesisches x-y-z-Koordinatensystem verwendet.

In einer weiteren vorteilhaften Ausführungsform wird von der graphischen Benutzerschnittstelle als Verfahrbereich zunächst ein rechteckiger Verfahrbereich definiert, wenn in dem von der graphischen Benutzerschnittstelle angezeigten Koordinatensystem ein erster und ein zweiter Punkt (A, B) in einer gemeinsamen Ebene eingegeben werden, und anschließend als Verfahrbereich ein quaderförmiges Verfahrvolumen definiert, wenn in demselben angezeigten Koordinatensystem ein dritter Punkt (C) außerhalb der durch den ersten und zweiten Punkt (A, B) verlaufenden Ebene eingegeben wird. Die zu Anfang gewählte Ebene kann dabei die xy-Ebene sein, die parallel zu der Tischoberfläche des Mikroskoptisches liegt. Es kann aber als Ausgangsfläche beispielsweise auch die xz-Ebene oder die yz-Ebene gewählt werden, die jeweils senkrecht auf der Tischoberfläche des Mikroskoptisches stehen. Mit dem dritten Punkt ( C ) wird dann die dritte Raumrichtung ausgewählt.

In einer weiteren vorteilhaften alternativen Ausführungsform werden von der graphischen Benutzerschnittstelle der eingegebene erste, zweite und/oder dritte Punkt (A, B, C) als Randpunkte des quaderförmigen Verfahrvolumens verwendet.

In einer nicht unter den Schutzbereich der Ansprüche fallenden Ausführungsform wird von der graphischen Benutzerschnittstelle als Verfahrbereich ein quaderförmiges Verfahrvolumen definiert, indem in dem angezeigten Koordinatensystem ein erster und ein zweiter Punkt (A, C) eingegeben werden, wobei der erste und/oder der zweite Punkt als Randpunkte des quaderförmigen Verfahrvolumens verwendet werden, insbesondere als Anfangs- und Endpunkte einer Raumdiagonale dieses Quadervolumens.

In einer weiteren vorteilhaften alternativen Ausführungsform wird mit der graphischen Benutzerschnittstelle ein Flächen- oder Raumgitter in dem Koordinatensystem aus den den abzubildenden Teilbereichen entsprechenden Anfahrpunkten angezeigt, in dem das Verfahrvolumen enthalten ist.

Generell ist es zweckmäßig, wenn mit der graphischen Benutzerschnittstelle das definierte Verfahrvolumen in dem Koordinatensystem angezeigt wird.

In einer weiteren vorteilhaften Ausführungsform wird mit der graphischen Benutzerschnittstelle das maximal mögliche Verfahrvolumen in dem Koordinatensystem angezeigt.

In einer weiteren vorteilhaften Ausführungsform werden mit der graphischen Benutzerschnittstelle bereits abgebildete Probenbereiche angezeigt. Diese bereits abgebildeten Probenbereiche können einem Benutzen bei der Eingabe der Auswahlpunkte für das gewünschte Verfahrvolumen als Anhaltspunkt dienen. Beispielsweise können die bereits abgebildeten Probenbereiche als halbtransparente Ebenen oder Volumen in dem Koordinatensystem dargestellt werden.

In einer weiteren vorteilhaften Ausführungsform wird in der graphischen Benutzerschnittstelle nach Definition des ersten Verfahrvolumens durch Eingabe wenigstens eines weiteren Punktes (D) ein geändertes Verfahrvolumen neu definiert bzw. modifiziert.

In einer weiteren vorteilhaften Ausführungsform wird von der graphischen Benutzerschnittstelle der wenigstens eine weitere eingegebene Punkt (D) als ein neuer Randpunkt des neu definierten Verfahrvolumens verwendet.

Die Erfindung betrifft schließlich ein Computerprogramm mit Programmcode, wobei bei dessen Ausführung auf einer Recheneinheit eines erfindungsgemäßen Mikroskopsystems ein erfindungsgemäßes Verfahren durchgeführt wird. Weiterhin betrifft die Erfindung ein entsprechendes Computerprogrammprodukt mit einem darauf gespeicherten Computerprogramm mit Programmcode, bei dessen Ausführung auf einer Recheneinheit eines erfindungsgemäßen Mikroskopsystems ein erfindungsgemäßes Verfahren durchgeführt wird. Das Computerprogramm kann als solches heruntergeladen oder hochgeladen werden oder auf einem Computerprogrammprodukt gespeichert oder zwischengespeichert sein. Als Computerprogrammprodukt kommen flüchtige oder nichtflüchtige Speichermedien, wie USB-Stick, RAM- oder ROM-Speicher bekannter Art, in Frage. Die genannte Recheneinheit eines erfindungsgemäßen Mikroskopsystems kann dabei die Steuereinrichtung oder ein Teil dieser Steuereinrichtung des Mikroskopsystems sein.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung beschrieben.

### Figurenbeschreibung

- Figur 1: zeigt schematisch zumindest einen Ausschnitt einer graphischen Benutzerschnittstelle eines erfindungsgemäßen Mikroskopsystems in einer ersten Ansicht.
- Figur 2: zeigt schematisch zumindest einen Ausschnitt einer graphischen Benutzerschnittstelle eines erfindungsgemäßen Mikroskopsystems in einer weiteren Ansicht.
- Figur 3: zeigt schematisch zumindest einen Ausschnitt einer graphischen Benutzerschnittstelle eines erfindungsgemäßen Mikroskopsystems in einer weiteren Ansicht.
- Figur 4: zeigt schematisch zumindest einen Ausschnitt einer graphischen Benutzerschnittstelle eines erfindungsgemäßen Mikroskopsystems in einer weiteren Ansicht.
- Figur 5: zeigt schematisch zumindest einen Ausschnitt einer graphischen Benutzerschnittstelle eines erfindungsgemäßen Mikroskopsystems in einer weiteren Ansicht.
- Figur 6: zeigt schematisch zumindest einen Ausschnitt einer graphischen Benutzerschnittstelle eines alternativen Mikroskopsystems, welches nicht unter den Schutzbereich der Ansprüche fällt.
- Figur 7: zeigt schematisch zumindest einen Ausschnitt einer graphischen Benutzerschnittstelle weiteren alternativen Mikroskopsystems, welches nicht unter den Schutzbereich der Ansprüche fällt.
- Figur 8: zeigt schematisch eine Ausführungsform eines erfindungsgemäßen Mikroskopsystems.
- Figur 9: zeigt schematisch eine weitere Ausführungsform eines erfindungsgemäßen Mikroskopsystems.

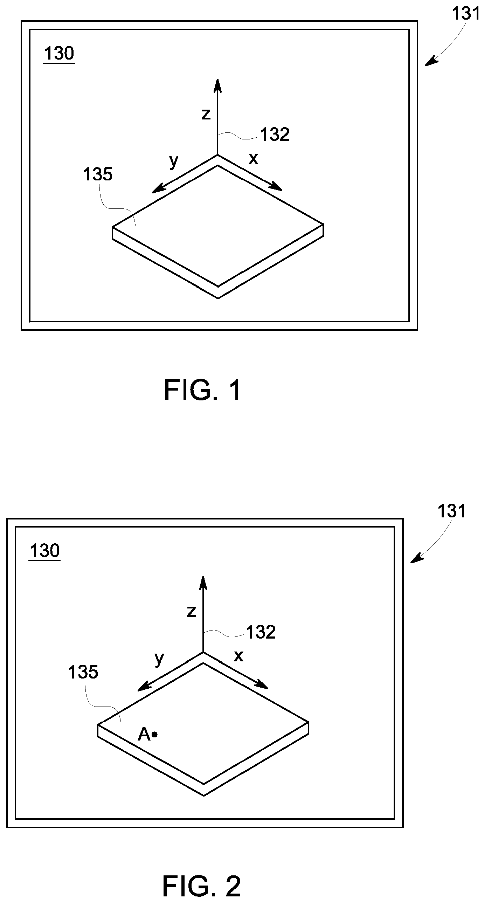

Die Figuren werden übergreifend beschrieben, gleiche Bezugszeichen bezeichnen gleiche Elemente. Zunächst soll anhand der Figuren 1 bis 5 eine Ausführungsform einer graphischen Benutzerschnittstelle 130 zur Festlegung eines einem abzubildenden Probenbereich entsprechenden Verfahrbereichs bzw. Scanbereichs durch zu erläuternde Benutzereingaben beschrieben werden. Die graphische Benutzerschnittstelle 130 ist auf einem Display 131 bzw. Monitor bzw. Anzeigesystem dargestellt, wobei auf dem Display 131 in der graphischen Benutzerschnittstelle 130 ein Koordinatensystem 132 angezeigt wird. In vorliegendem Ausführungsbeispiel handelt es sich um ein kartesisches Koordinatensystem mit x-, y- und z-Achsen. 135 bezeichnet den maximal möglichen Verfahrbereich, wie er durch die Maximal- und Minimalpositionen eines x-y-Mikroskoptisches des Mikroskopsystems vorgegeben ist, der in x- und y-Richtung verschiebbar ist.

Figur 2 zeigt die graphische Benutzerschnittstelle 130 nach Eingabe eines Punktes A durch einen Benutzer. Bei diesem Punkt A handelt es sich hier um die aktuelle Fokusposition, das entsprechende Bild des dem Punkt A zugeordneten Teilbereichs der Probe wird beispielsweise in einem anderen (nicht dargestellten) Bereich der graphischen Benutzerschnittstelle 130 oder auf einem anderen (nicht dargestellten) Displaybereich des Displays 131 oder auf einem separaten Display (nicht gezeigt) dargestellt.

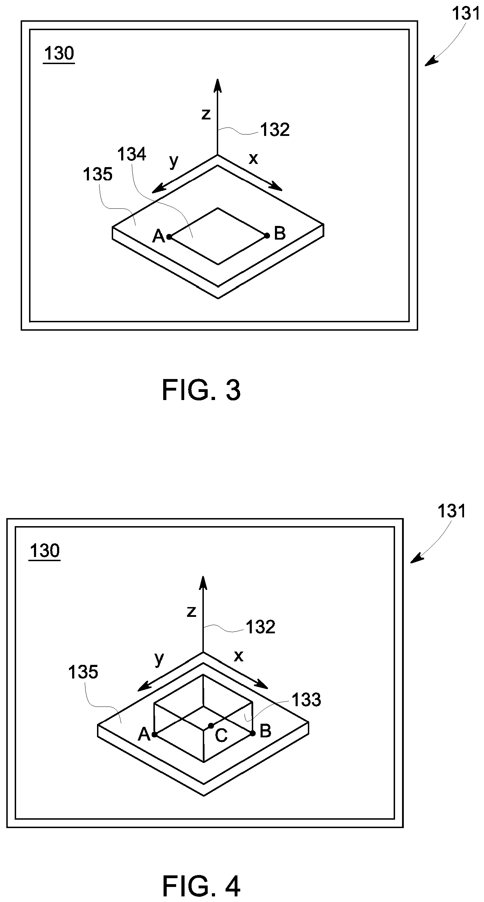

In einem weiteren, in Figur 3 dargestellten Schritt gibt ein Benutzer einen zweiten Punkt B in derselben x-y-Ebene ein. Vorteilhafterweise (aber nicht zwingend) wird der dem Punkt B entsprechende Teilbereich der Probe in den Fokus des Beobachtungsstrahlengangs der Bilderzeugungseinrichtung des Mikroskopsystems verfahren und ein entsprechendes Bild erzeugt. Auf diese Weise kann der Benutzer kontrollieren, ob der Punkt B sich noch im interessierenden Probenbereich bzw. noch innerhalb der Probe befindet. Die Koordinaten der Punkte A und B können wie folgt beschrieben werden: A = (x_{A}, y_{A}, z₁); B = (x_{B}, y_{B}, z₁). Nach Bestätigung durch den Benutzer wird in der graphischen Benutzerschnittstelle 130 zunächst ein rechteckiger Verfahrbereich 134 definiert, wobei die Punkte A und B in diesem Ausführungsbeispiel einander gegenüberliegende Eckpunkte des rechteckigen Verfahrbereichs 134 bilden. Der rechteckige Verfahrbereich 134 erstreckt sich in x-Richtung zwischen den Koordinaten x_{A} und x_{B} und in y-Richtung zwischen den Koordinaten y_{B} bis y_{A}.

In einem nächsten, in Figur 4 dargestellten Schritt wird durch Eingabe eines weiteren Punktes C in dasselbe dargestellte Koordinatensystem 132 der Scanbereich in Form eines Verfahrvolumens 133 definiert. Hierzu ist lediglich ein Punkt C einzugeben, der außerhalb der durch die Punkte A und B verlaufenden x-y-Ebene liegt. Dieser Punkt C kann durch seine Koordinaten dargestellt werden als C = (x_{C}, yc, z_{C}). Die graphische Benutzerschnittstelle 130 ist derart eingerichtet, dass parallel zum rechteckigen Verfahrbereich 134 eine x-y-Ebene in Höhe der Koordinate z_{C} aufgespannt wird, woraus sich ein quaderförmiges Verfahrvolumen 133 als Scanvolumen definieren lässt. In dem gezeigten Ausführungsbeispiel gemäß Figur 4 liegt der Punkt C auf einer Kante dieses quaderförmigen Verfahrvolumens 133.

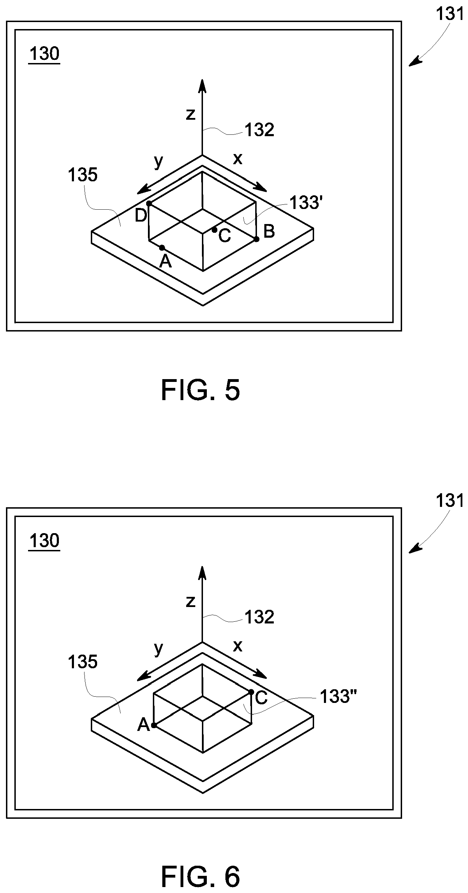

Figur 5 zeigt schließlich eine Möglichkeit der Modifikation des Verfahrvolumens 133. Hierbei wird durch Eingabe eines weiteren Punktes D, der außerhalb des gemäß Figur 4 zuerst definierten Verfahrvolumens 133 liegt, ein neues, geändertes Verfahrvolumen 133' definiert. Der Punkt D lässt sich durch die Koordinaten (x_{D}, y_{D}, z_{D}) beschreiben. Das resultierende erweiterte Verfahrvolumen 133' wird in der graphischen Benutzerschnittstelle 130 derart definiert, dass sich das Verfahrvolumen vom kleinsten x-Wert der eingegebenen Punkte zum größten x-Wert der eingegebenen Punkte, vom kleinsten y-Wert der eingegebenen Punkte zum größten y-Wert der eingegebenen Punkte und schließlich vom kleinsten z-Wert der eingegebenen Punkte zum größten z-Wert der eingegebenen Punkte erstreckt. Im Ausführungsbeispiel gemäß Figur 5 erstreckt sich das Verfahrvolumen 133' in x-Richtung von x_{D} bis x_{B}, in y-Richtung von y_{B} bis y_{D} und in z-Richtung von z₁ bis z_{D}.

Bei der Anwahl der Punkte C und/oder D kann zweckmäßigerweise der jeweils entsprechende Teilbereich der Probe in den Fokus des Beobachtungsstrahlengangs der Bilderzeugungseinrichtung des Mikroskopsystems verfahren werden, um einem Benutzer entsprechende Bilder der Teilbereiche anzuzeigen. Auf diese Weise kann beispielsweise in einfacher Weise kontrolliert werden, ob der Punkt D noch einem Punkt innerhalb des interessierenden abzubildenden Probenbereichs bzw. innerhalb der Probe entspricht.

Nach Definition des Verfahrvolumens 133 bzw. 133' über die graphische Benutzerschnittstelle 130 beginnt der Probenscan beispielsweise bei der Koordinate z₁. Dann wird die entsprechende x-y-Rechteckfläche gescannt, was beispielsweise in Zeilen oder mäanderförmig erfolgt. Dabei werden an vordefinierten Koordinaten Bilder der entsprechenden Teilbereiche der Probe aufgenommen. Anschließend wird in einer parallelen Scanebene bei einer anderen z-Koordinate in gleicher Weise gescannt und dabei Bilder aufgenommen, und so fort, bis ein letzter rechteckiger Scanbereich bei der Koordinate z_{D} erreicht ist. Nachdem diese letzte Scanebene gescannt ist, können die aufgenommenen Bilder verarbeitet werden. Üblicherweise werden die Bilder einer x-y-Ebene zu einem Mosaikbild zusammengesetzt, sodass sich ein Bild der entsprechenden Probenfläche in der betreffenden Ebene ergibt. Insgesamt erhält man auf diese Weise einen z-Stack, also einen Bildstapel, von Bildern, die ihrerseits auch zu einem dreidimensionalen Bild des entsprechenden Probenvolumens verarbeitet werden können.

Figur 6 zeigt eine weitere Alternative zur Definition eines quaderförmigen Verfahrvolumens, welche nicht unter den Schutzbereich der Ansprüche fällt, und in welcher ein Benutzer in dem in der graphischen Benutzerschnittstelle 130 angezeigten Koordinatensystem 132 einen ersten Punkt A und einen zweiten Punkt C eingibt. Hierbei bilden die Punkte A und C Randpunkte des quaderförmigen Verfahrvolumens, hier - zur besseren Verständlichkeit des zugrunde liegenden Prinzips - zwei einander gegenüberliegende Eckpunkte des quaderförmigen Verfahrvolumens 133". Die Punkte A und C bilden somit die beiden Endpunkte der Raumdiagonale des Quaders, welches das Verfahrvolumen 133" festlegt. Die Festlegung der beiden Punkte A und C erfolgt analog zur bereits oben geschilderten Vorgehensweise. Es ist einzig darauf zu achten, dass die Punkte A und C nicht in derselben x-y-Ebene liegen, da andernfalls nur ein zweidimensionaler, rechteckiger Verfahrbereich definiert werden würde. Wiederum ist es zweckmäßig, wenn die Punkte A und C in oder auf dem abzubildenden Probenbereich liegen.

Nach Eingabe der beiden Punkte A und C errechnet eine Recheneinheit des Mikroskopsystems 100 das quaderförmige Verfahrvolumen 133" und zeigt es in der graphischen Benutzerschnittstelle an. Die Recheneinheit kann auch zumindest zum Teil Bestandteil der Benutzerschnittstelle oder separat beispielsweise in der Displayeinrichtung oder einer Graphikkarte vorhanden sein oder schließlich ihrerseits Bestandteil einer umfassenderen Recheneinheit sein, die in der Steuereinrichtung 140 oder einer anderen Komponente des Mikroskopsystems 100 angeordnet ist. Die Koordinaten der Punkte A und C können mit (x_{A}, y_{A}, z_{A}) bzw. (x_{C}, y_{C}, z_{C}) wiedergegeben werden. Der quaderförmige Verfahrbereich 133" erstreckt sich in x-Richtung von x_{A} bis x_{C}, in y-Richtung von y_{C} bis y_{A} und in z-Richtung von z_{A} bis z_{C}.

Nach Definition des quaderförmigen Verfahrbereichs 133" erfolgt der Scan mit Bilderzeugung in der gleichen Weise, wie bereits oben anhand der Figuren 1 bis 5 beschrieben.

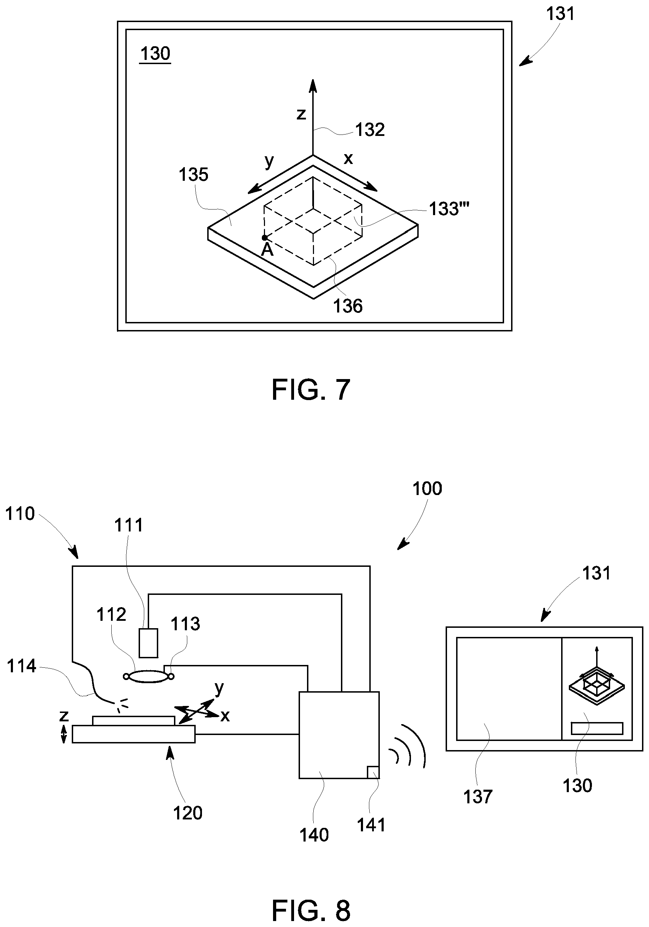

Figur 7 zeigt wiederum eine alternative Möglichkeit zur Festlegung eines dem abzubildenden Probenbereich entsprechenden Verfahrbereich 133‴, welche nicht unter den Schutzbereich der Ansprüche fällt, wobei in diesem Fall die graphische Benutzerschnittstelle 130 derart eingerichtet ist, dass durch Eingabe eines einzigen Punktes A durch einen Benutzer in ein auf der graphischen Benutzerschnittstelle 130 angezeigtes Koordinatensystem 132 ein Raumgitter bzw. Volumenumriss 136 ausgehend von dem Punkt A in dem Koordinatensystem 132 angezeigt wird, mittels dessen das Verfahrvolumen 133‴ definiert wird.

In dem in Figur 7 dargestellten Ausführungsbeispiel wird ein quaderförmiges Verfahrvolumen 133‴ vorgegebener Abmessung an vorgegebener Stelle, hier ausgehend von Punk A, erzeugt und in der graphischen Benutzerschnittstelle 130 auf dem Display 131 angezeigt. Der Benutzer kann nun durch Eingabe das vorgeschlagene Raumgitter bzw. Volumenumriss 136 bestätigen, sodass dieses Raumgitter 136 das quaderförmige Verfahrvolumen 133‴ bestimmt. Es kann auch vorgesehen sein, dass ein Benutzer in analoger Vorgehensweise zu dem Ausführungsbeispiel gemäß Figur 5 eine Modifizierung des Raumgitters 136 vornehmen kann. Dies kann durch Eingabe eines weiteren Punktes (entsprechend Punkt D in Figur 5) erfolgen, der außerhalb oder innerhalb des Raumgitters 136 liegt und der als neuer Rand- oder Eckpunkt eines neuen Verfahrvolumens definiert wird. Wiederum alternativ kann das Raumgitter 136 an einer bestimmten Stelle, beispielsweise an einem Eckpunkt, angeklickt und durch bekannte Maussteuerung mittels Ziehen vergrößert oder verkleinert werden.

Alternativ oder zusätzlich kann der angezeigte Volumenumriss 136 auch als Raumgitter verwendet bzw. verstanden werden. In diesem Fall können mit Vorteil die den abzubildenden Teilbereichen entsprechenden Anfahrpositionen im Raumgitter 136 als Gitterpunkte (nicht dargestellt) angezeigt werden. Auf diese Weise erhält der Benutzer schnellen Überblick über die Anordnung der Teilbereiche, die zur Abbildung des Probenbereichs dienen.

In einer übergreifenden, vorteilhaften Ausführung wird nach Eingabe des mindestens einen Punktes A, B, C oder D in dem Koordinatensystem 132 der eingegebene Punkt graphisch hervorgehoben. Das kann zum Beispiel farbig sein oder durch einen dickeren oder blinkenden Punkt.

Nach Definition eines geeigneten Verfahrvolumens 133‴ erfolgt analog zu den oben geschilderten Ausführungsbeispielen der Scan mit Bildaufnahme.

Die Figuren 8 bis 9 zeigen Beispiele konkreter Ausführungsformen eines Mikroskopsystems 100. Das Mikroskopsystem 100 ist sehr vereinfacht dargestellt, da aus dem Stand der Technik an sich bekannte Komponenten hier nicht näher erläutert werden sollen. Das Mikroskopsystem 100 weist eine Bilderzeugungseinrichtung 110, eine Verfahreinrichtung 120, eine Steuereinrichtung 140 sowie eine graphische Benutzerschnittstelle 130 auf. Die Steuereinrichtung 140 kann eine Recheneinheit umfassen. Die Recheneinheit kann aber ebenso in einer anderen Komponente des Mikroskopsystems 100 angeordnet sein. Die Bilderzeugungseinrichtung 110 ist in Figur 8 anhand der Komponenten Mikroskopobjektiv 112 und Kamera 111 dargestellt. Zur Beleuchtung dient ein Schwanenhalslicht 114 sowie ein ringförmig um das Objektiv 112 geführtes Ringlicht 113. Das Schwanenhalslicht 114 und das Ringlicht 113 können wahlweise einzeln oder kombiniert aktiviert werden. Dies ermöglicht eine Beleuchtung aus beliebigen Beleuchtungsrichtungen unter beliebigen Beleuchtungswinkeln. Dies ist bei Proben und beobachteten Objekten mit ausgeprägter Topologie von Vorteil, um Strukturen der Probe bzw. des beobachteten Objektes deutlicher abzubilden.

Die Verfahreinrichtung 120 weist in diesem Ausführungsbeispiel im Wesentlichen einen x-y-z-Mikroskoptisch auf, der in alle drei Raumrichtungen verfahren werden kann. Somit kann eine Verschiebung des Objektivs 112 in z-Richtung entfallen.

Zum Verfahren der Probe in der x-y-Ebene sowie zum Fokussieren auf einen Teilbereich der Probe durch Verfahren in z-Richtung wird der Mikroskoptisch 121 angesteuert. Die Probe selbst befindet sich auf einem Probenhalter 122 auf dem Mikroskoptisch 121. Die Ansteuerung des Mikroskoptisches 121 erfolgt durch eine Steuereinrichtung 140. Wie dargestellt steuert die Steuereinrichtung 140 auch weitere Komponenten, wie Objektiv 112, Ringlicht 113, Kamera 111 und Schwanenhalslicht 114, an. Auf diese Weise können die gewünschten Parameter der Beleuchtung sowie der Kamera geeignet eingestellt werden. Die Definition des Scanbereichs und der darauffolgende Scan mit Bilderzeugung wird ebenfalls über die Steuereinrichtung 140 zusammen mit der graphischen Benutzerschnittstelle 130 gesteuert. In diesem Ausführungsbeispiel steht die Steuereinrichtung 140 mit der graphischen Benutzerschnittstelle 130 kabellos in Verbindung, wobei geeigneter Weise eine W-LAN-Verbindung 141 (engl. WiFi) eingesetzt wird. Alternativ ist selbstverständlich auch eine Kabelverbindung möglich. Prinzipiell ermöglicht die W-LAN-Verbindung eine räumliche Trennung der graphischen Benutzerschnittstelle 130 von den übrigen Komponenten des Mikroskopsytems 100. Dazu ist sie beispielsweise auf einem Display 131 eines Tablet-Rechners dargestellt, der mittel W-LAN mit dem Mikroskopsystem 100 in Verbindung steht.

Das Display 131 zeigt die graphische Benutzerschnittstelle 130 analog zu den oben behandelten Ausführungsbeispielen, wobei ein Koordinatensystem zur Definition eines Verfahrvolumens angezeigt wird. Auf dem Display 131 werden beispielsweise Anzeigen gemäß den Figuren 1 bis 7 angezeigt. Wie aus Figur 8 ersichtlich zeigt das Display 131 zusätzlich zur der graphischen Benutzerschnittstelle 130 einen weiteren größeren Anzeigebereich 137, auf dem zweckmäßigerweise derjenige Teilbereich abgebildet wird, der gerade im Fokus der Bilderzeugungseinrichtung 110 liegt. Dies erleichtert einem Benutzer das Navigieren in der Probe und somit das Identifizieren des abzubildenden Probenbereichs. Auf diese Weise kann ein Benutzer beispielsweise gemäß dem Ausführungsbeispiel der Figuren 1 bis 4 einen interessierenden Probenbereich identifizieren und ein entsprechendes Verfahrvolumen 133 definieren. Nach Definition des Verfahrvolumens 133 in der graphischen Benutzerschnittstelle 130 steuert die Steuereinrichtung 140 den Scan durch Ansteuerung der Verfahreinrichtung 120 und die hierzu synchronisierte Bilderzeugung durch Ansteuerung der Bilderzeugungseinrichtung 110. Nach Scannen einer x-y-Ebene wird das verarbeitete Bild beispielsweise in dem Anzeigebereich 137 dargestellt. Gleiches gilt für weitere x-y-Ebenen bis der gesamte definierte z-Bereich gescannt ist. Danach kann eine Berechnung eines dreidimensionalen Bildes des abgebildeten Probenbereichs erfolgen, wobei wiederum in dem Anzeigebereich 137 eine entsprechende 3D-Darstellung erfolgen kann.

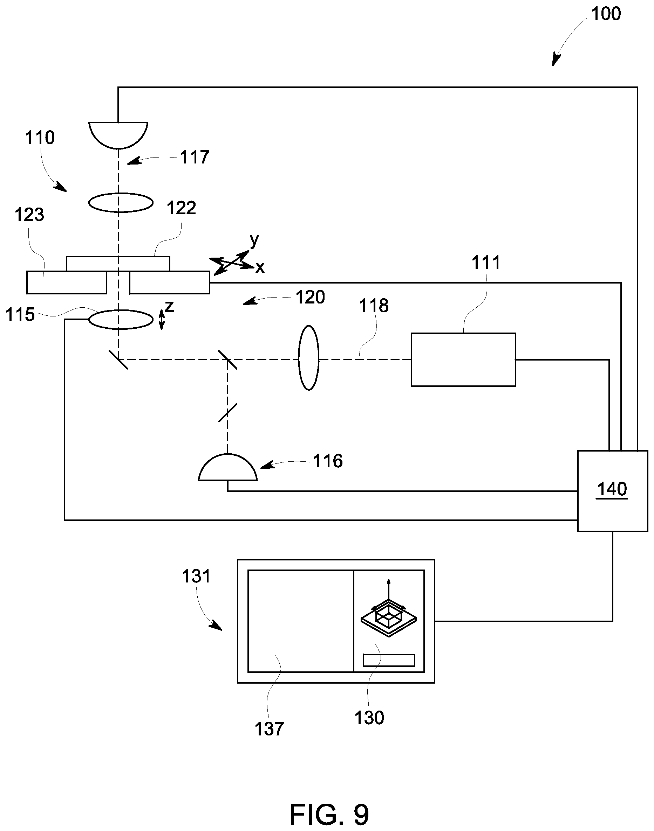

Figur 9 zeigt schematisch eine weitere Ausführungsform eines Mikroskopsystems 100 mit der Möglichkeit einer Auflicht- und Durchlichtbeleuchtung. Wiederum sollen die an sich bekannten Komponenten eines solchen Mikroskopsystems nur kursorisch erwähnt werden. Das Mikroskopsystem 100 verfügt über eine Bilderzeugungseinrichtung 110, eine Verfahreinrichtung 120, eine Steuereinrichtung 140 sowie eine graphische Benutzerschnittstelle 130. Die Bilderzeugungseinrichtung 110 umfasst als wesentliche Komponenten ein in z-Richtung verfahrbares Mikroskopobjektiv 115 sowie nicht weiter bezeichnete Umlenkelemente und Linsen und eine im Beobachtungsstrahlengang 118 angeordneten Kamera 111. Die objektivseitig angeordnete Auflichtbeleuchtungseinrichtung ist mit 116 bezeichnet Ihr Licht wird über einen halbdurchlässigen Strahlteiler zu dem Objektiv 115 gelenkt.

Der erzeugte Beleuchtungsstrahlengang wird über nicht bezeichnete Umlenkelemente und das Objektiv 115 auf die Probe geleitet. Von dem Fokus eines Teilbereichs der Probe ausgehendes Licht wird umgekehrt von dem Objektiv 115 und weiteren nicht bezeichneten optischen Elementen in Form des Beobachtungsstrahlengangs 118 zu der Kamera 111 geleitet, in der die Erzeugung eines Bildes des Teilbereichs erfolgt. Die Probe selbst befindet sich auf einem Probenhalter 122 auf einem x-y-Mikroskoptisch 123. Als Verfahreinrichtung 120 dient hierbei die x-y-Verstellung des Mikroskoptisches 123 sowie der Fokussiertrieb des Objektivs 115 in z-Richtung (vgl. die Doppelpfeile mit den Richtungen x, y, z).

Weiterhin dargestellt ist eine Durchlichtbeleuchtungseinrichtung 117, deren Licht die Probe durchstrahlt und danach zum Objektiv 115 gelangt. Die Durchlichtbeleuchtungseinrichtung 117 verfügt über eine weitere nicht näher bezeichnete Linse zur Erzeugung eines Durchlichtbeleuchtungsstrahlengangs, der die Probe auf dem Probenhalter 122 beleuchtet, wobei Durchlicht von dem Objektiv 115 aufgenommen wird und in Form eines Beobachtungsstrahlengangs 118 zur Kamera 111 geleitet wird. Auf diese Weise kann eine Probe mit dem hier dargestellten Mikroskopsystem 100 in Auflicht- und/oder Durchlichtbeleuchtung betrachtet und abgebildet werden. Eine Ansteuerung der entsprechenden Bilderzeugung erfolgt über die Steuereinrichtung 140, die (zumindest) die Komponenten der Durchlichtbeleuchtungseinrichtung 117, Mikroskoptisch 123, Kamera 111, Auflichtbeleuchtungseinrichtung 116, Fokussiertrieb des Objektivs 115, ansteuert. Weiterhin steht die Steuereinrichtung 140 mit dem Display 131 bzw. der graphischen Benutzerschnittstelle 130 in dem dargestellten Fall in Kabelverbindung. Selbstverständlich ist auch hier alternativ eine W-LAN-Verbindung möglich, wie sie im Zusammenhang mit Figur 8 erläutert wurde.

Die graphische Benutzerschnittstelle 130 zeigt auch hier ein Koordinatensystem 132 zur Definition eines Verfahrvolumens an. Die entsprechende Anzeige und das entsprechende Vorgehen zur Definition eines solchen Verfahrvolumens kann den Ausführungsformen gemäß den Figuren 1 bis 7 entsprechen. Das Display 131 weist neben der graphischen Benutzerschnittstelle 130 wiederum einen größeren Anzeigebereich 137 auf, auf dem jeweils erzeugte Bilder angezeigt werden können. Beispielsweise können hier Bilder von Teilbereichen bei der Identifikation des interessierenden Probenbereichs abgebildet werden, wodurch die Auswahl geeigneter Punkte zur Definition eines Verfahrvolumens erleichtert wird. Nach Definition eines Verfahrbereichs erfolgt in der bereits anhand von Figur 8 erläuterten Vorgehensweise ein Scan mit Bilderzeugung. Hierzu wird beispielsweise bei fester Fokusposition des Objektivs 115 der Mikroskoptisch 123 nach einem vorgegebenen Muster in x-y-Richtung verfahren, bis ein Bild einer x-y-Ebene des abzubildenden Probenbereichs vorliegt. Dieses kann wiederum in dem Anzeigebereich 137 angezeigt werden. Anschließend erfolgt ein weiterer x-y-Scan mit veränderter z-Position des Objektivs 115. Dieses Verfahren wird so lange wiederholt, bis der gesamte z-Bereich des Verfahrvolumens abgearbeitet ist. Aus dem sich ergebenden Bildstapel (z-Stack) kann ein dreidimensionales Probenbild berechnet werden, das beispielsweise wiederum auf dem Anzeigebereich 137 als 3D-Bild dargestellt wird.

### Bezugszeichenliste

- 100: Mikroskopsystem
- 110: Bilderzeugungseinrichtung
- 111: Kamera
- 112: Objektiv
- 113: Ringlicht
- 114: Schwanenhalslicht
- 115: Objektiv
- 116: Auflichtbeleuchtungseinrichtung
- 117: Durchlichtbeleuchtungseinrichtung
- 118: Beobachtungsstrahlengang
- 120: Verfahreinrichtung
- 121: x-y-z-Mikroskoptisch
- 122: Probenhalter
- 123: x-y-Mikroskoptisch
- 130: graphische Benutzerschnittstelle
- 131: Display
- 132: Koordinatensystem
- 133, 133', 133", 133‴: Verfahrvolumen, Verfahrbereich
- 134: rechteckiger Verfahrbereich
- 135: maximaler Verfahrbereich
- 136: Raumgitter
- 137: Anzeigebereiche
- 140: Steuereinrichtung
- 141: W-LAN-Verbindung
- A, B, C, D: Punkt

## Patentansprüche

1. Mikroskopsystem (100) zur Abbildung zumindest eines Bereichs einer Probe mit
einer Bilderzeugungseinrichtung (110) zur mikroskopischen Abbildung eines in einem Beobachtungsstrahlengang (118) erfassten Teilbereichs des abzubildenden Probenbereichs,
einer Verfahreinrichtung (120), die eingerichtet ist, den abzubildenden Teilbereich in den Beobachtungsstrahlengang (118) der Bilderzeugungseinrichtung (110) zu verfahren,
einer auf einem Display (131) dargestellten graphischen Benutzerschnittstelle (130), die zur Festlegung eines dem abzubildenden Probenbereich entsprechenden, dreidimensionalen Verfahrbereichs (133) durch mindestens eine Benutzereingabe eingerichtet ist, wobei die graphische Benutzerschnittstelle derart eingerichtet ist, dass sie ein dreidimensionales Koordinatensystem (132) anzeigt und, dass durch Eingabe von drei Punkten (A, B, C, D) in dem angezeigten dreidimensionalen Koordinatensystem (132) der dreidimensionale Verfahrbereich (133) in Form eines Verfahrvolumens festgelegt wird, wobei mindestens einer der drei einzugebenden Punkte (A, B, C, D) einen Randpunkt des Verfahrvolumens bildet, und wobei die Benutzereingabe direkt auf dem Display im angezeigten Koordinatensystem erfolgt, und
einer Steuereinrichtung (140), die, nach Eingabe der drei Punkte (A, B, C, D), abhängig von dem definierten Verfahrvolumen (133) die Verfahreinrichtung (120) derart ansteuert, dass sie eine dem festgelegten Verfahrvolumen entsprechende Menge von Teilbereichen nacheinander in den Beobachtungsstrahlengang (118) fährt und die Teilbereiche jeweils durch die Bilderzeugungseinrichtung (110) abgebildet werden.

2. Verfahren zur Abbildung zumindest eines Bereichs einer Probe mittels eines Mikroskopsystems (100), wobei
ein in einem Beobachtungsstrahlengang (118) einer Bilderzeugungseinrichtung (110) des Mikroskopsystems liegender Teilbereich des abzubildenden Probenbereichs mittels der Bilderzeugungseinrichtung abgebildet wird,
der abzubildende Teilbereich mittels einer Verfahreinrichtung (120) des Mikroskopsystems in den Beobachtungsstrahlengang der Bilderzeugungseinrichtung verfahren wird,
ein dem abzubildenden Probenbereich entsprechender, dreidimensionaler Verfahrbereich (133) durch mindestens eine Benutzereingabe in einer graphischen Benutzerschnittstelle (130) des Mikroskopsystems festgelegt wird, wobei die Benutzerschnittstelle ein dreidimensionales Koordinatensystem (132) anzeigt und durch Eingabe von drei Punkten (A, B, C, D) in dem Koordinatensystem der dreidimensionale Verfahrbereich in Form eines Verfahrvolumens definiert wird, wobei mindestens einer der drei einzugebenden Punkte (A, B, C, D) einen Randpunkt des Verfahrvolumens bildet, und wobei die Benutzereingabe direkt auf dem Display im angezeigten Koordinatensystem erfolgt, und wobei die Verfahreinrichtung von einer Steuereinrichtung (140) des Mikroskopsystems, nach Eingabe der drei Punkte (A, B, C, D), abhängig von dem definierten Verfahrvolumen derart angesteuert wird, dass innerhalb des definierten Verfahrvolumens eine vorbestimmte Menge von Teilbereichen angefahren und durch die Bilderzeugungseinrichtung abgebildet wird.

3. Verfahren nach Anspruch 2, wobei mindestens ein einzugebender Punkt (A, B, C, D) derart gewählt wird, dass dieser auf oder in dem abzubildenden Probenbereich liegt.

4. Verfahren nach Anspruch 2 oder 3, wobei die drei Punkte (A, B, C) als Randpunkte des Verfahrvolumens angewendet werden.

5. Verfahren nach einem der Ansprüche 2 bis 4, wobei als das angezeigte Koordinatensystem ein kartesisches x-y-z-Koordinatensystem verwendet wird.

6. Verfahren nach einem der Ansprüche 2 bis 5, wobei mit der graphischen Benutzerschnittstelle als Verfahrbereich zunächst ein rechteckiger Verfahrbereich definiert wird, wenn in dem von der graphischen Benutzerschnittstelle angezeigten Koordinatensystem ein erster und ein zweiter Punkt (A, B) in einer gemeinsamen Ebene eingegeben werden, und anschließend als Verfahrbereich ein quaderförmiges Verfahrvolumen definiert wird, wenn in demselben in der graphischen Benutzerschnittstelle angezeigten Koordinatensystem ein dritter Punkt (C) außerhalb der durch den ersten und zweiten Punkt (A, B) verlaufenden Ebene eingegeben wird.

7. Verfahren nach Anspruch 6, wobei mit der graphischen Benutzerschnittstelle der eingegebene erste, zweite und/oder dritte Punkt (A, B, C) als Randpunkte des quaderförmigen Verfahrvolumens zugeordnet werden.

8. Verfahren nach einem der Ansprüche 2 bis 7, wobei mit der graphischen Benutzerschnittstelle das definierte Verfahrvolumen in dem Koordinatensystem angezeigt wird.

9. Verfahren nach Anspruch 8, wobei mit der graphischen Benutzerschnittstelle ein Flächen- oder Raumgitter aus den den abzubildenden Teilbereichen entsprechenden Anfahrpunkten in dem Koordinatensystem angezeigt wird, in dem das Verfahrvolumen (133"') enthalten ist.

10. Verfahren nach einem der Ansprüche 2 bis 9, wobei mit der graphischen Benutzerschnittstelle das maximal mögliche Verfahrvolumen in dem Koordinatensystem angezeigt wird.

11. Verfahren nach einem der Ansprüche 2 bis 10, wobei mit der graphischen Benutzerschnittstelle bereits abgebildete Proben- oder Teilbereiche vor oder während der Definition des Verfahrvolumens in dem Koordinatensystem angezeigt werden.

12. Verfahren nach einem der Ansprüche 2 bis 11, wobei mit der graphischen Benutzerschnittstelle nach Definition eines ersten Verfahrvolumens (133) durch Eingabe wenigstens eines weiteren Punktes (D) ein geändertes Verfahrvolumen (133') neu definiert wird.

13. Verfahren nach Anspruch 12, wobei mit der graphischen Benutzerschnittstelle der wenigstens eine weitere eingegebene Punkt (D) als ein neuer Randpunkt des geänderten Verfahrvolumens (133') erfasst wird.

14. Computerprogramm mit Programmcode, wobei bei dessen Ausführung auf einer Recheneinheit eines Mikroskopsystems (100) gemäß Anspruch 1 ein Verfahren gemäß einem der Ansprüche 2 bis 13 durchgeführt wird.

15. Computerprogrammprodukt mit einem darauf gespeicherten Computerprogramm mit Programmcode, bei dessen Ausführung auf einer Recheneinheit eines Mikroskopsystems (100) gemäß Anspruch 1 ein Verfahren gemäß einem der Ansprüche 2 bis 13 durchgeführt wird.

## Claims

1. Microscope system (100) for imaging at least one region of a sample with
an image generating apparatus (110) for microscopically imaging a partial region of the sample region to be imaged, which partial region is captured in an observation beam path (118),
a displacement apparatus (120) which is configured to displace the partial region to be imaged into the observation beam path (118) of the image generating apparatus (110),
a graphical user interface (130) shown on a display (131) which is configured to define a three-dimensional displacement region (133) corresponding to the sample region to be imaged by way of at least one user input, wherein the graphical user interface is configured in such manner that it displays a three-dimensional coordinate system (132), and in that, by inputting three points (A, B, C, D) in the displayed three-dimensional coordinate system (132), the three-dimensional displacement region (133) is defined in the form of a displacement volume, wherein at least one of the three points (A, B, C, D) to be input forms an edge point of the displacement volume, and wherein the user input is made directly on the display in the displayed coordinate system, and
a control apparatus (140) which, after input of the three points (A, B, C, D), activates the displacement apparatus (120) depending on the defined displacement volume (133) in such manner that it successively moves a quantity of partial regions corresponding to the defined displacement volume into the observation beam path (118) and the partial regions are each imaged by the image generating apparatus (110).

2. Method for imaging at least one region of a sample by means of a microscope system (100), wherein a partial region of the sample region to be imaged, which partial region is located in an observation beam path (118) of an image generating apparatus (110) of the microscope system, is imaged by means of the image generating apparatus, the partial region to be imaged is displaced into the observation beam path of the image generating apparatus by means of a displacement apparatus (120) of the microscope system, a three-dimensional displacement region (133) corresponding to the sample region to be imaged is defined by at least one user input in a graphical user interface (130) of the microscope system, wherein the user interface displays a three-dimensional coordinate system (132) and by inputting three points (A, B, C, D) in the coordinate system, the three-dimensional displacement region is defined in the form of a displacement volume, wherein at least one of the three points (A, B, C, D) to be input forms an edge point of the displacement volume, and wherein the user input is made directly on the display in the displayed coordinate system, and wherein the displacement apparatus is activated by a control apparatus (140) of the microscope system, after input of the three points (A, B, C, D), depending on the defined displacement volume in such manner that a predetermined quantity of partial regions are approached within the defined displacement volume and imaged by the image generating apparatus.

3. Method according to claim 2, wherein at least one point (A, B, C, D) to be input is selected in such manner that it lies on or in the sample region to be imaged.

4. Method according to claim 2 or 3, wherein the three points (A, B, C) are used as edge points of the displacement volume.

5. Method according to any one of claims 2 to 4, wherein a Cartesian xyz coordinate system is used as the displayed coordinate system.

6. Method according to any one of claims 2 to 5, wherein a rectangular displacement region is initially defined as the displacement region with the graphical user interface if a first and a second point (A, B) are input in a common plane in the coordinate system displayed by the graphical user interface, and then a cuboidal displacement volume is defined as the displacement region if a third point (C) outside the plane passing through the first and second point (A, B) is input in the same coordinate system displayed in the graphical user interface.

7. Method according to claim 6, wherein, using the graphical user interface, the input first, second and/or third point (A, B, C) are assigned as edge points of the cuboid displacement volume.

8. Method according to any one of claims 2 to 7, wherein, using the graphic user interface, the defined displacement volume is displayed in the coordinate system.

9. Method according to claim 8, wherein, using the graphical user interface, a surface or spatial grid of the approach points corresponding to the partial regions to be imaged is displayed in the coordinate system, in which the displacement volume (133‴) is contained.

10. Method according to any one of claims 2 to 9, wherein, using the graphic user interface, the maximum possible displacement volume in the coordinate system is displayed.

11. Method according to any one of claims 2 to 10, wherein, using the graphic user interface, already imaged sample or partial regions are displayed in the coordinate system before or during the definition of the displacement volume.

12. Method according to any one of claims 2 to 11, wherein, using the graphic user interface, after a first displacement volume (133) is defined by inputting at least one further point (D), a changed displacement volume (133') is redefined.

13. Method according to claim 12, wherein, using the graphical user interface, the at least one further input point (D) is detected as a new edge point of the changed displacement volume (133').

14. Computer program with program code, wherein, when executed on a computing unit of a microscope system (100) according to claim 1, a method according to claims 2 to 13 is carried out.

15. Computer program product with a computer program having program code stored thereon, wherein, when executed on a computing unit of a microscope system (100) according to claim 1, a method according to any one of claims 2 to 13 is carried out.

## Revendications

1. Système de microscope (100) destiné à reproduire au moins une zone d'un échantillon avec
un dispositif de génération d'images (110) pour la reproduction microscopique d'une zone partielle de la zone d'échantillon à reproduire détectée dans une trajectoire optique d'observation (118),
un dispositif de déplacement (120) qui est mis au point pour déplacer la zone partielle à reproduire dans la trajectoire optique d'observation (118) du dispositif de génération d'images (110),
une interface utilisateur graphique (130) représentée sur un écran (131), qui est mise au point pour définir une zone de déplacement tridimensionnelle (133) correspondant à la zone d'échantillon à reproduire par au moins une entrée d'utilisateur, dans lequel l'interface utilisateur graphique est mise au point de telle manière qu'elle affiche un système de coordonnées tridimensionnel (132) et que, par l'entrée de trois points (A, B, C, D) dans le système de coordonnées tridimensionnel (132) affiché, la zone de déplacement tridimensionnelle (133) est déterminée sous la forme d'un volume de déplacement, dans lequel au moins un des trois points (A, B, C, D) à entrer forme un point marginal du volume de déplacement, et dans lequel l'entrée d'utilisateur s'effectue directement sur l'écran dans le système de coordonnées affiché, et
un dispositif de commande (140) qui, après l'entrée des trois points (A, B, C, D), en fonction du volume de déplacement (133) défini, pilote le dispositif de déplacement (120) de telle manière qu'il déplace une quantité de zones partielles correspondant au volume de déplacement défini les unes après les autres dans la trajectoire optique d'observation (118) et que les zones partielles sont chacune représentées par le dispositif de génération d'images (110).

2. Procédé de reproduction d'au moins une zone d'un échantillon à l'aide d'un système de microscope (100), dans lequel
une zone partielle de la zone d'échantillon à reproduire se trouvant dans une trajectoire optique d'observation (118) d'un dispositif de génération d'images (110) du système de microscope est reproduite au moyen du dispositif de génération d'images, la zone partielle à reproduire est déplacée au moyen d'un dispositif de déplacement (120) du système de microscope dans la trajectoire optique d'observation du dispositif de génération d'images,
une zone de déplacement tridimensionnelle (133) correspondant à la zone d'échantillon à reproduire est définie par au moins une entrée d'utilisateur dans une interface utilisateur graphique (130) du système de microscope,
dans lequel l'interface utilisateur affiche un système de coordonnées tridimensionnel (132) et la zone de déplacement tridimensionnelle est définie sous la forme d'un volume de déplacement par l'entrée de trois points (A, B, C, D) dans le système de coordonnées, dans lequel au moins un des trois points (A, B, C, D) à entrer forme un point marginal du volume de déplacement, et dans lequel l'entrée d'utilisateur s'effectue directement sur l'écran dans le système de coordonnées affiché, et
dans lequel le dispositif de déplacement est piloté par un dispositif de commande (140) du système de microscope, après l'entrée des trois points (A, B, C, D), en fonction du volume de déplacement défini de telle manière qu'une quantité prédéfinie de zones partielles est approchée à l'intérieur du volume de déplacement défini et est reproduite par le dispositif de génération d'images.

3. Procédé selon la revendication 2, dans lequel au moins un point (A, B, C, D) à entrer est choisi de telle manière qu'il se trouve sur ou dans la zone d'échantillon à reproduire.

4. Procédé selon la revendication 2 ou la revendication 3, dans lequel les trois points (A, B, C) sont appliqués comme points marginaux du volume de déplacement.

5. Procédé selon l'une quelconque des revendications 2 à 4, dans lequel un système de coordonnées cartésien x-y-z est utilisé comme système de coordonnées affiché.

6. Procédé selon l'une quelconque des revendications 2 à 5, dans lequel une zone de déplacement rectangulaire est tout d'abord définie avec l'interface utilisateur graphique comme zone de déplacement lorsque, dans le système de coordonnées affiché par l'interface utilisateur graphique, un premier et un deuxième point (A, B)
sont entrés dans un plan commun, puis un volume de déplacement en forme de parallélépipède est défini comme zone de déplacement lorsqu'un troisième point (C) en dehors du plan s'étendant à travers le premier et le deuxième point (A, B) est entré dans le même système de coordonnées affiché dans l'interface utilisateur graphique.

7. Procédé selon la revendication 6, dans lequel
les premier, deuxième et/ou troisième points (A, B, C) entrés peuvent être attribués à l'interface utilisateur graphique comme points marginaux du volume de déplacement en forme de parallélépipède.

8. Procédé selon l'une quelconque des revendications 2 à 7, dans lequel
le volume de déplacement défini est affiché dans le système de coordonnées avec l'interface utilisateur graphique.

9. Procédé selon la revendication 8, dans lequel
une grille de surfaces ou d'espaces composée des points d'approche correspondant aux zones partielles à reproduire est affichée, avec l'interface utilisateur graphique, dans le système de coordonnées dans lequel le volume de déplacement (133‴) est contenu.

10. Procédé selon l'une quelconque des revendications 2 à 9, dans lequel le volume de déplacement maximal possible est affiché dans le système de coordonnées avec l'interface utilisateur graphique.

11. Procédé selon l'une quelconque des revendications 2 à 10, dans lequel des zones d'échantillons ou des zones partielles déjà reproduites avec l'interface utilisateur graphique sont affichées dans le système de coordonnées avant ou pendant la définition du volume de déplacement.

12. Procédé selon l'une quelconque des revendications 2 à 11, dans lequel un volume de déplacement modifié (133') est redéfini avec l'interface utilisateur graphique après définition d'un premier volume de déplacement (133) par l'entrée d'au moins un autre point (D).

13. Procédé selon la revendication 12, dans lequel
l'au moins un autre point (D) entré est détecté comme un nouveau point marginal du volume de déplacement modifié (133') avec l'interface utilisateur graphique.

14. Programme informatique avec un code de programme, dans lequel lors de son exécution sur une unité de calcul d'un système de microscope (100) selon la revendication 1, un procédé selon l'une quelconque des revendications 2 à 13 est mis en œuvre.

15. Produit-programme informatique avec un programme informatique avec un code de programme stocké dessus, lors de l'exécution duquel sur une unité de calcul d'un système de microscope (100) selon la revendication 1, un procédé selon l'une quelconque des revendications 2 à 13 est mis en œuvre.
